# EUROPÄISCHE PATENTSCHRIFT

(11) **EP 0 596 320 B1**
(45) Veröffentlichungstag und Bekanntmachung des Hinweises auf die Patenterteilung: **09.07.1997**
(21) Anmeldenummer: 93116904.9
(22) Anmeldetag: 20.10.1993
(51) Int. Cl.: G01D 1/02, G07C 5/08

(54) **Unfalldatenspeicher**
Accident data memory
Dispisitif de mémorisation des données d'un accident

(30) Priorität: 05.11.1992 DE 4237365
(43) Veröffentlichungstag der Anmeldung: 11.05.1994
(73) Patentinhaber: VDO Adolf Schindling AG, 60326 Frankfurt/Main (DE)
(72) Erfinder: Hilger, Gernot, D-78647 Trossingen (DE); Gruler, Martin, Dipl.-Ing. (FH), D-78554 Aixheim (DE); Gutsch, Werner, D-78126 Königsfeld (DE); Hertzner, Alfred, Dr., D-78089 Unterkirnach (DE)

(56) Entgegenhaltungen:
- EP-A- 0 566 716
- WO-A-90/06492
- DE-A- 3 741 050
- RADIO FERNSEHEN ELEKTRONIK Bd. 39, Nr. 2 , 1990 , BERLIN,DD Seiten 119 - 121 XP000113663 RÖSSLER ET AL. 'INTELLIGENTER SENSOR MIT U8820.

## Beschreibung

Die Erfindung betrifft einen Unfalldatenspeicher in einem Fahrzeug zur Registrierung einer die Fahrzeugdynamik betreffenden Meßgröße mit einer sensorischen Meßeinrichtung, einem Mikroprozessor und mindestens einem Speicher.

In der DE-C-41 36 968 (Veröffentlichung 12.11.92); EP-A-0 566 716 (Art. 54 (3,4) EPÜ) wird eine Anordnung zur Registrierung von Fahrdaten vorgeschlagen, die die analogen, von einer sensorischen Meßeinrichtung eines fahrzeugtauglichen Datenerfassungsgerätes erfaßten Meßsignale fortlaufend mit zwei unterschiedlichen Frequenzen f1 und f2 abtastet und in zwei parallel angeordneten, mit den Frequenzen f1 und f2 getakteten Ringspeichern speichert. Die beiden Abtastfrequenzen sind dabei so gewählt, daß f1 geeignet ist, die niederfrequenten Meßsignale des normalen Fahrbetriebs abzutasten, und daß f2 entsprechend höherfrequent ist, um eine hohe Auflösung der in einer Unfallsituation entstehenden, hochfrequenteren Meßsignale zu ermöglichen.

Erfahrungsgemäß werden im normalen Fahrbetrieb über einen größeren Zeitraum überwiegend niederfrequente Meßsignale mit relativ kleiner Signalamplitude erfaßt, wohingegen in einer Unfallsituation oftmals bedingt durch einen Stoßvorgang während eines kurzen Zeitraums höherfrequente Meßsignale mit verhältnismäßig großer Signalamplitude zur Registrierung anstehen.

Wegen dieser Gegebenheiten wird üblicherweise während einer normalen Fahrt keine hohe zeitliche Auflösung für die Datenspeicherung verwendet. Sie würde nur dazu führen, daß eine sehr hohe Speicherkapazität vorgehalten werden muß, was aber gerade bei einem kostensensiblen, für die breite Anwendung bestimmten fahrzeugtauglichen Registriergerät wirtschaftlich nicht vertretbar ist. Andererseits ist es aber erforderlich, für den Fall eines plötzlich eintretenden Unfallereignisses die Meßdaten mit einer hohen Auflösung zur Verfügung zu haben, da aus ihnen zur Klärung des Unfallhergangs die Bewegungsbahn des Fahrzeugs möglichst genau rekonstruierbar sein soll.

Gemäß der eingangs genannten Schrift wurde bisher versucht, die Speicherkapazität dadurch in einem vertretbaren Rahmen zu halten, daß das kontinuierlich anstehende Meßsignal mit zwei unterschiedlichen Frequenzen abgetastet wird. Diese Vorgehensweise bedeutet aber auch folgendes: Obwohl also eine höhere, von der Steuereinheit bereits erzeugte Abtastfrequenz f2 zur Verfügung steht, geht bei der Abtastung mit der niedrigeren Frequenz f1 durch die Beschränkung in der Datenwahl auf nur jeden f2/f1-ten Wert der größte Teil der von der sensorischen Meßeinrichtung erfaßten Information völlig ungenutzt verloren.

Das ist deshalb besonders nachteilig, weil auch die mit der niedrigeren Abtastfrequenz f1 abgespeicherten Meßwerte die Rohdaten für eine anschließende Auswertung bilden. Wenn beispielsweise die sensorische Meßeinrichtung Beschleunigungssignale erfaßt, sollen daraus später durch Integration mit möglichst hoher Genauigkeit Geschwindigkeitswerte ermittelt werden. Greift man aber aus dem durch die Abtastfrequenz f1 vorgegebenen Zeitintervall nur einen Momentanwert heraus, können Signalfrequenzen, die das Shannonsche Abtasttheorem nicht erfüllen, nicht mehr aufgelöst werden. Eine Abtastfrequenz, die das Abtasttheorem nicht erfüllt, kann zu Meßfehlern führen, die beispielsweise durch Aliasingeffekte verursacht werden. Damit ergeben sich bei der Integration der Beschleunigungssignale fehlerhafte Ergebnisse.

Aus der Meßtechnik ist es nun bekannt, nichtektrische Meßgrößen sensorisch zu erfassen, die erfaßten Meßwerte in digitale Signale umzuwandeln, diese in einem dem Sensor zugeordneten Mikrocomputer zwischenzuspeichern und zu mitteln. Ein solches Vorgehen wird beispielsweise in dem Aufsatz _{"}Intelligenter Sensor mit U8820" in ,,Radio Fernsehen Elektronik", Bd. 39, Nr.2, 1990, Berlin, DD, Seiten 119 bis 121 oder auch in dem Dokument DE 37 41 050 A1 beschrieben. Zusätzlich erwähnt die Schrift WO-A-90/06492 die Bildung eines Mittelwertes aus zeitlich aufeinanderfolgenden Meßwerten des Sensorsignals, wobei dieser Mittelwert vorteilhafter Weise aus einer Anzahl von Meßwerten gebildet wird, die einer Potenz von 2 entspricht. Der in diesen 3 Fundstellen geschilderte Stand der Technik geht weder darauf ein, wie in der praktischen Durchführung der Mittelwert gebildet wird, noch beziehen sich diese Lösungen auf ein in einem Fahrzeug angeordnetes Registriergerät, insbesondere nicht auf einen Unfalldatenspeicher, bei dem die Signalauswertung im Hinblick auf die Analyse einer unfallrelevanten Situation äußerst zeitkritisch ist. Denn bei einem Unfalldatenspeicher muß im Millisekundenbereich die Entscheidung getroffen werden, ob eine Unfallregistrierung einzuleiten ist. Diese Funktion ist bei einem Unfalldatenspeicher aufgrund des Kostendruckes nur mit aller einfachsten Mittel zu realisieren. Diesbezüglich läßt der bekannte Stand der Technik aber keine geeignete Lösung erkennen.

Der Erfindung liegt also die Aufgabe zugrunde, einen Unfalldatenspeicher in einem Fahrzeug zur Registrierung einer die Fahrzeugdynamik betreffenden Meßgröße dahingehend zu verbessern, daß ohne Erhöhung der Speicherkapazität eine Voraussetzung zur Auswertung der gespeicherten Rohdaten mit höherer Genauigkeit geschaffen wird. Die Aufgabe wird durch die Merkmale des Patentanspruchs gelöst.

Der wesentliche Vorteil der gefundenen Lösung besteht darin, daß nicht ein einziger Momentanwert aus dem durch die Abtastfrequenz f1 vorgegebenen Zeitintervall herausgegriffen wird, sondern es wird der Informationsgehalt aller mit der hohen Abtastfrequenz f2 von der sensorischen Meßeinrichtung abgegriffenen Meßwerte ausgewertet. Dieser zeitliche Mittelwert gibt naturgemäß den Verlauf des in dem Zeitintervall erfaßten Meßsignals bedeutend genauer wieder als ein einzelner Momentanwert. Trotzdem wird mit der Frequenz f1 für das betreffende Zeitintervall nur ein einziger Wert zur Abspeicherung gebracht. Die erfindungsgemäße Lösung bedingt demnach keinen höheren Bedarf an Speicherkapazität, sondern erhält den Vorteil des der Anordnung nach DE-C-41 36 968 zugrundeliegenden Verfahrens.

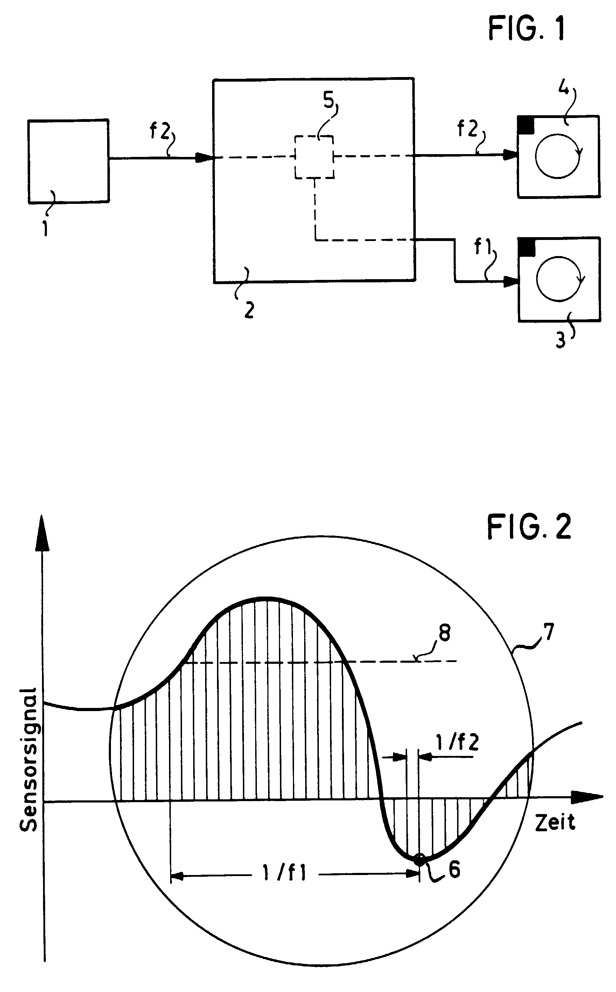

Die Figur 1 zeigt eine bevorzugte Ausführung des erfindungsgemäßen Speichers. Die von der sensorischen Meßeinrichtung 1 erfaßten Meßwerte werden mit der Frequenz f2 abgetastet und der zwischenspeichernden Steuereinheit 2, die mit Mitteln 5 zur Mittelwertbildung ausgestattet ist, zur Mittelwertbildung zugeleitet. Entsprechend der Anordnung nach DE-C-41 36 968 werden die Meßdaten anschließend in mindestens zwei zueinander parallel angeordneten Ringspeichern 3 und 4 abgelegt, wobei von der Steuereinheit 2 der Ringspeicher 3 mit f1 und der Ringspeicher 4 mit f2 getaktet wird. Im Ringspeicher 3 stehen jedoch keine mit der Frequenz f1 abgetasteten Momentanwerte, sondern die jeweils über die Periodendauer der Frequenz f1 ermittelten Mittelwerte.

Die Figur 2 dient zur Veranschaulichung des zugrundeliegenden Problems. Betrachtet man den zeitlichen Verlauf des Sensorsignals stark vergrößert, mag sich beispielsweise ein Kurvenverlauf zeigen, wie in der Ausschnittsvergrößerung 7 dargestellt. Wird in dem durch die Frequenz f1 bemessenen Zeitintervall die Meßkurve lediglich zu einem einzigen Zeitpunkt abgetastet, könnte beispielsweise der Meßpunkt 6 herausgegriffen werden. Wird allein dieser Meßwert 6 der Speicherung zugeführt, wird sich bei einer anschließend auf diesen Wert stützenden Auswertung in offenkundiger Weise ein erheblich vom tatsächlichen Meßwertniveau abweichendes Ergebnis ergeben.

Vom Punkt 6 abgeleitete Aussagen zum Meßkurvenverlauf führen bei der Anwendung in einem Registriergerät zur Rekonstruktion der Bewegungsbahn eines Fahrzeugs zu Ungenauigkeiten, die nicht mehr tolerierbar sind. Die Genauigkeitsanforderungen müssen außerdem auch deshalb so hoch angesetzt werden, weil die erfaßten Meßwerte zu weiteren Steuerungsaufgaben herangezogen werden. So soll z. B. dann, wenn die erfaßten Meßwerte einen bestimmten Schwellwert überschreiten, im Registriergerät auf einen anderen Aufzeichnungsmodus umgeschaltet werden. In der praktischen Anwendung ist es notwendig, diesen Schaltpunkt sehr genau und reproduzierbar einhalten zu können, um unangebrachte Umschaltungen zu vermeiden.

Deshalb ist num der Meßkurvenverlauf mit der hohen Frequenz f2 abzutasten und darüber der Mittelwert zu bilden. In dem in der Figur 2 gezeigten Beispiel mag dann ein Wert betragsmäßig in Höhe der Linie 8 ermittelt werden, der dem tatsächlichen Kurvenverlauf bereits bedeutend näher kommt. Durch die Ermittlung des Mittelwertes wird demnach im Vergleich zur Erfassung eines einzigen Momentanwertes das Aufzeichnungsverfahren deutlich verbessert.

Es ist vorteilhaft, das Frequenzverhältnis f2/f1 als eine Potenz zur Basis 2 zu wählen, da sich auf diese Weise eine einfache, mikroprozessorgerechte Mittelwertbildung durchführen läßt.

Die Durchführung einer echten Division ist in einem Mikroprozessor zeitaufwendig. Die Anwendung in einem Registriergerät zur Erfassung der Fahrdynamik verlangt jedoch ein schnelles Verfahren mit minimaler Belastung der Steuereinheit, weshalb die üblicherweise zur Anwendung gebrachten Verfahren hier nicht in Betracht kommen.

Der Vorteil der Mittelwertbildung besteht hier darin, daß bei einem derart gewählten Frequenzverhältnis f2/f1, das die Anzahl der zu mittelnden Meßwerte festlegt, die für die Mittelwertbildung nötige Division durch einfaches Verschieben eines Datenwortes realisiert werden kann. Dieses geschieht durch Ausnutzung der Shift-Funktion des Mikroprozessors. Das besagte Datenwort bildet die Summe der in jenem Zeitintervall erfaßten Meßwerte und wird dann um die dem Exponenten zur Basis 2 entsprechende Anzahl von Stellen nach rechts verschoben.

Beträgt das Frequenzverhältnis f2/f1 beispielsweise 32, was 2⁵ entspricht, so wird zunächst in dem durch die Periodendauer der Frequenz f1 bemessenen Zeitintervall die Summe aller 32 mit der Frequenz f2 abgetasteten Meßwerte gebildet und anschließend das resultierende, die Summe darstellende Datenwort um 5 Stellen nach rechts verschoben, dh die letzten 5 Stellen werden von diesem Datenwort entfernt. Das verbleibende Datenwort stellt dann den Mittelwert aus den 32 Meßwerten dar und wird nun zusätzlich zu den mit der Frequenz f2 abgelegten Meßdaten mit der Frequenz f1 gespeichert.

Für Frequenzverhältnisse f2/f1, die ungleich einer Potenz zur Basis 2 sind, wird für eine schnelle, mikroprozessorgerechte Mittelwertbildung vorgeschlagen, die Meßwerte, die während des durch die Periodendauer von der Frequenz f1 bemessenen Zeitintervalls durch Abtastung mit der Frequenz f2 erfaßt und der Steuereinheit zugeleitet werden, derart mit Gewichtungsfaktoren zu versehen, daß alle nötigen Divisionen in der zuvor beschriebenen Weise durch Ausnutzung der Shift-Funktion des Prozessors ausgeführt werden können.

Bei dem speziellen Tastverhältnis f2/f1=20 sollen beispielsweise von der Steuereinheit insgesamt 21 Meßwerte eingelesen werden. Bei 20 durch f2 bestimmten Zeitintervallen werden 21 Werte erfaßt, weil die Abtastung in diesem Beispiel jeweils am Anfang und Ende jeden Zeitintervalls erfolgen soll. Bildet man nun derart die Summe über alle Meßwerte, daß jeder Meßwert mit ungeradzahliger Ordnungszahl nur mit seinem halben Wert in die Mittelwertbildung eingeht, erhält man 11 Meßwerte mit dem Gewichtungsfaktor 1 (=2⁰) und 10 Meßwerte mit dem Gewichtungsfaktor 0,5 (=2⁻¹). Auf diese Weise wird eine Gewichtung der Meßwerte vorgenommen. Die Summe aller Gewichtungsfaktoren beträgt(11 * 1) + (10 * 0,5) = 16, was 2⁴ entspricht. Um den Mittelwert zu bilden, wird nun noch die Summe über alle gewichteten Meßwerte durch 16, dh durch die Summe aller Gewichtungsfaktoren, dividiert. Da stets nur durch Potenzen der Basis 2 dividiert werden muß, können alle nötigen Divisionen durch Ausnutzung der Shift-Funktion des Prozessors ausgeführt werden. Eine zeitaufwendige echte Division wird vermieden.

## Patentansprüche

1. Unfalldatenspeicher in einem Fahrzeug zur Registrierung einer die Fahrzeugdynamik betreffenden Meßgröße mit einer sensorischen Meßeinrichtung (1), einem Mikroprozessor (2) und mindestens einem Speicher (3),
wobei der Mikroprozessor (2)
a) eine niederfrequente Frequenz f1 und eine höherfrequente Frequenz f2 generiert,
b) den von der sensorischen Meßeinrichtung (1) erfaßten Verlauf der Meßgröße fortlaufend in einem durch die Frequenz f2 gegebenen Takt abtastet und
c) die abgetasteten Meßpunkte (6) digitalisiert,
d) die abgetasteten Meßpunkte (6) für ein durch die Periodendauer der Frequenz f1 bemessenes Zeitintervall zwischenspeichert,
e) aus allen zwischengespeicherten Meßpunkten (6) dadurch einen gewichteten Mittelwert (8) bildet, daß er die Beträge der Meßpunkte (6) in der Weise mit aus Potenzen zur Basis 2 bestehenden Gewichtungsfaktoren versieht, daß auch die Summe aller Gewichtungsfaktoren eine Potenz zur Basis 2 ergibt,
f) den Quotienten aus allen zwischengespeicherten, aufsummierten gewichteten Meßpunktbeträgen und dem Summenwert über alle Gewichtungsfaktoren durch eine Stellenverschiebung bildet und
g) den Wert dieses Quotienten in den Speicher (3) legt.

## Claims

1. An accident data store in a vehicle, for recording a measured variable relating to the vehicle dynamics and having a sensor measurement device (1), a microprocessor (2) and at least one store (3), where the microprocessor (2)
a) generates a low frequency f1 and a higher frequency f2,
b) continuously scans the profile, detected by the sensor measurement device (1), of the measured variable at a cycle determined by the frequency f2, and
c) digitalizes the scanned measurement points (6),
d) temporarily stores the scanned measurement points (6) for a time interval dimensioned by the period length of frequency f1,
e) forms from all the temporarily stored measurement points (6) a weighted average value (8) by providing the quantities of the measurement points (6) with weighting factors comprising powers in base 2 in such a way that the sum of all the weighting factors also gives a power in base 2,
f) forms the quotient of all the temporarily stored, summed weighted measurement point quantities and the sum value of all the weighting factors, by an arithmetic shift, and
g) places the value of this quotient in the store (3).

## Revendications

1. Mémoire de données d'accident dans un véhicule pour l'enregistrement d'une grandeur de mesure concernant la dynamique du véhicule avec un dispositif de mesure sensoriel (1), un microprocesseur (2) et au moins une mémoire (3),
le microprocesseur (2)
a) générant une fréquence f1 de basse fréquence et une fréquence f2 de fréquence plus élevée,
b) échantillonnant en continu la variation de la grandeur de mesure acquise par le dispositif de mesure sensoriel (1) en un rythme donné par la fréquence f2 et
c) numérisant les points de mesure (6) échantillonnés,
d) stockant en mémoire tampon les points de mesure échantillonnés (6) pendant un intervalle de temps déterminé par la durée de période de la fréquence f1,
e) formant de tous les points de mesure (6) stockés en mémoire tampon une valeur moyenne pondérée (8) en dotant les montants des points de mesure (6) de telle manière de facteurs de pondération constitués de puissances pour la base 2 que la somme de tous les facteurs de pondération donne elle aussi une puissance pour la base 2,
f) formant le quotient de tous les montants de points de mesure pondérés totalisés, stockés en mémoire tampon et de la valeur de somme sur tous les facteurs de pondération en opérant un décalage positionnel et
g) stockant la valeur de ce quotient dans la mémoire (3).
